# EUROPEAN PATENT APPLICATION

(11) **EP 3 656 603 A1**
(43) Date of publication of application: **27.05.2020**
(21) Application number: 18208082.0
(22) Date of filing: 23.11.2018
(51) Int. Cl.: B60L 53/14, B60L 53/10, H02J 7/00

(54) **CHARGING STATION AND SYSTEM WITH VEHICLE PRESENCE SENSOR AND AUTHENTICATION FUNCTION**

(71) Applicant: Thiele, Henrik, 80803 München (DE); Upton, Richard Andrew, 82041 Oberhaching (DE)
(72) Inventor: Thiele, Henrik, 80803 München (DE); Upton, Richard Andrew, 82041 Oberhaching (DE)
(74) Representative: Grünecker Patent- und Rechtsanwälte PartG mbB

(57) **Abstract**

The present invention provides a charging station for charging an electric vehicle on a parking place allocated to the charging station. The charging station comprises a power source for providing electric power to the vehicle, a sensor for detecting whether the parking place is occupied or not; and a controller for performing an authentication process and for enabling charging of the vehicle with electric power provided by the power source in response to a result of the authentication process. The controller is configured to initiate the authentication process when a detection result of the sensor has changed from not occupied to occupied.

## Description

The present invention relates to a charging station for charging an electric vehicle on a parking place allocated to the charging station and to a charging system for electric vehicles.

### BACKGROUND OF THE INVENTION

Electric vehicles are becoming more and more popular. With the increase in the number of electric vehicles, the demand for a charging infrastructure will grow as well. Conventional charging stations may simply provide a power outlet to which the vehicle may be connected in order to charge its batteries. Charging stations may also be configured as a kiosk which requires the user to pay a fee for the received service.

Since the number of available charging stations is limited and since it may require a significant amount of time until the batteries of an electric vehicle are fully charged, drivers of such vehicles may wish to plan ahead for the charging process. Therefore, reservation systems have been suggested that allow the driver to check in advance what charging stations are currently available and to make a reservation for a certain charging station in order to ensure that same is still available when needed.

Such a reservation system is known, for instance, from US 2012/0221473 A1. According to this system, a mobile terminal, such as a smart phone, is allowed to reserve and activate a charging station for an electric vehicle using a web site or a server computer system. In a first step, a reservation request is accepted from a first terminal using the server. A reservation certificate is then provided to the mobile terminal in response to the request using the server. The reservation certificate is accepted by the charging station from the mobile second terminal using a communications technique like Bluetooth. After determining that the reservation certificate is authentic, the electric vehicle charger is activated.

Even with the above reservation system, problems may arise in connection with the determination of whether or not a certain charging station is available or not. In a conventional system, charging stations are connected to the server by means of a data communication network in order to report status information, in particular on whether the station is currently in use or not. However, a charging station that is currently not in use is not necessarily available for charging, because it may be blocked, for instance, by an illegally parked vehicle.

This problem is avoided by a reservation system known from EP 3 369 605 A1, wherein parking places for wirelessly charging electric vehicles are provided with a sensor for detecting whether a vehicle is present. Information indicating whether or not a certain parking place for a wireless charging station is currently occupied by a vehicle is then made available by means of a server and an application program on a mobile terminal, such as the driver's smart phone. The driver may thus place a reservation for a charging station that is not currently in use and not blocked by another vehicle.

When the user has arrived at the reserved charging station, he/she has to park the vehicle on the allocated parking place, get out of the vehicle and walk over to the station's user terminal in order to enter user credentials, reservation codes, accounting information, and so on. The user interaction with the charging station may also involve inserting a chip card into a card reader, wirelessly reading an RFID card having stored thereon user identification or accounting information, or pairing the user's smart phone with the user terminal in order to wirelessly transmit a previously issued reservation certificate. Only after all these processes have been successfully completed, the vehicle may be plugged into the charging station and the actual charging process may be started.

### SUMMARY OF THE INVENTION

From the above it is apparent that the entire process of finding and reserving an available charging station at a desired destination until starting the actual charging process leaves room for improvement.

It is thus an object of the present invention to provide a charging station that allows for a more straight-forward user interaction.

This is achieved by the features as set forth in the independent claim. Preferred embodiments are the subject matter of the dependent claims.

It is the particular approach of the present invention to provide a vehicle sensor for detecting whether the parking place allocated to a charging station is occupied or not, and to initiate an authentication process when a detection result of the vehicle sensor has changed from not occupied to occupied. According to a further aspect, authentication is performed wirelessly with a mobile device that may be attached to the vehicle or carried by the user. In this manner, authentication may already be completed successfully before the user has left the vehicle.

According to a first aspect of the invention, a charging station is provided for charging an electric vehicle on a parking place allocated to the charging station. The charging station comprises a power source for providing electric power to the vehicle, a sensor for detecting whether the parking place is occupied or not, and a controller for performing an authentication process and for enabling charging of the vehicle with electric power provided by the power source in response to a result of the authentication process. The charging station is characterized in that the controller is configured to initiate the authentication process when a detection result of the sensor has changed from not occupied to occupied.

Preferably, the charging station further comprises a card reader configured to read authentication information stored on a card, in particular on a credit card, a girocard, an RFID membership card, an RFID roaming card or an RFID tag, wherein the controller is further configured to enable the card reader to read the authentication information only after the detection result of the sensor has changed from not occupied to occupied.

In this manner, tampering with the charging station can be prevent in a situation when no vehicle is parked on the allocated parking place. Moreover, the authentication process may be started automatically as soon as the vehicle is parked at the charging station without any further user interaction.

Preferably, the charging station may also comprise a wireless communication unit configured to scan for mobile devices in a vicinity of the charging station, wherein the controller is further configured to determine whether at least one of the scanned mobile devices has been previously registered with an operator of the charging station, and to complete the authentication process with one of the previously registered mobile devices.

Hence, if a user carrying a mobile device suitable for authentication approaches the charging station, the mobile device may be detected automatically and the authentication process may be initiated without further user interaction.

The mobile device may be a mobile phone, a smart phone, an RFID tag, a long-range RFID tag, a Bluetooth device, an in-vehicle Bluetooth device, a Bluetooth token, a WiFi device, or an in-vehicle WiFi device.

In a preferred embodiment, the controller is further configured to determine whether a mobile device has been scanned for the first time when the detection result of the sensor has changed from not occupied to occupied, and to determine whether the mobile device has been previously registered only if the mobile device has been scanned for the first time not more than a first amount of time before and not later than a second amount of time after the detection result of the sensor (210) has changed from not occupied to occupied. More generally, the controller may be configured to determine that a mobile device has been scanned for the first time if the mobile device was scanned in a first time interval that starts with a predefined temporal offset relative to the point in time when the detection result of the sensor has changed from not occupied to occupied and was not scanned in a second time interval immediately preceding the first time interval.

In this manner, mobile devices that arrive at the charging station coincidentally with the vehicle may be discriminated from other nearby mobile devices, thus ensuring that the correct mobile device is selected for authentication. Moreover, by setting appropriate values for the time window, only those devices will be used for authentication that arrive at the charging station not more than a first amount of time before the vehicle is detected and not later than a second amount of time after the vehicle is detected.

If is determined that more than one of the scanned devices has been previously registered with the operator of the charging station, the controller is preferably further configured to determine a strength of a wireless signal received from the previously registered mobile devices, and to complete the authentication process with the previously registered mobile device from which the strongest wireless signal is received.

In this manner, a situation may be resolved where a user with a registered mobile device happens to pass by while another user with another registered mobile device approaches the charging station in order to charge his/her vehicle.

If is determined that more than one of the scanned devices has been previously registered with the operator of the charging station, the controller is further configured to switch to a 2-factor authentication which requires an additional confirmation at the respective device.

Here, 2-factor authentication provides an additional level of security in a situation where the mobile device of a user cannot safely be discriminated from the mobile device of a passer-by.

In a preferred embodiment, the controller is further configured to obtain a MAC address of each of the scanned mobile devices and to determine whether the scanned device has been previously registered with the operator of the charging station on the basis of the obtained MAC address.

The MAC address of a mobile device is a unique identifier that allows for a straight-forward pre-authentication of potential users.

Further, the charging station may further comprise a socket for receiving a cable to connect the vehicle to the power source and/or a cable with a plug connector for connecting the cable to the vehicle, wherein enabling the charging process comprises at least one of activating the power source, unlocking the socket, and unlocking the cable. The socket and/or the cable may also be unlocked upon initiating the authentication process, i.e., when the detection result of the sensor has changed from not occupied to occupied. In this manner, vehicle to grid communication according to, e.g., the ISO 15118 standard may be used for completing authentication.

Preferably, the sensor is pressure sensor, a magnetic sensor, a radar sensor, an infrared sensor, or an imaging sensor. Depending on circumstances, a certain type of sensor may be advantageous over another type of sensor.

In a preferred embodiment, the charging station further comprises a status indicator for providing a visual indication of at least two different states of the charging station selected from available, reserved, occupied, charging, out of service, and illegal parking.

In this manner, a user may easily recognize a charging station that is a certain state, e.g., available, reserved, occupied, etc.

According to a further aspect of the invention, the charging station further comprises a network interface, wherein the controller is further configured to communication with a remote server via the network interface to exchange at least one of authentication information, authorization information and accounting information. Moreover, the controller may be further configured to transmit status information to the remote server and/or to receive reservation information from the remote server, said status information indicating a present state of the charging station, including available, reserved, occupied, charging, out of service, and illegal parking.

This allows the user to employ an application program on a mobile terminal, e.g. a smart phone, to locate and/or reserve an available charging station at a certain destination.

The present invention also provides a charging system for electric vehicles. The system comprises a plurality of the above described charging stations and a server connected to each of the charging stations via a data communication network. The server is configured to receive status information from each of the plurality of charging stations, said status information indicating a present state of the respective charging station, including at least one of available, reserved, occupied, charging, out of service, and illegal parking. The server is further configured to maintain a database with information on the plurality of charging stations, including information on the location of each of the charging stations and the received status information, and to provide information on the state and the location of a charging station in a form retrievable by mobile communication terminals.

The server may also be configured to receive a reservation request from a mobile communication terminal, said reservation request indicating a desired charging station of the plurality of charging stations, to determine whether the reservation request can be allowed, to transmit a reservation response to the mobile communication terminal, and to transmit, if the request has been allowed, a reservation instruction to the desired charging station.

Preferably, the mobile communication terminal is configured to initiate the reservation request via a touch or a speech menu.

The reservation request preferably indicates a desired destination input by the user at the mobile communication terminal and the reservation response indicates the next available charging station and a distance from the charging station to the desired destination.

Advantageously, the mobile communication terminal is configured to ask the user whether he/she wants to reserve said charging station and to ask the user whether he/she wants to navigate there. The mobile communication terminal may even be configured to check in real-time how long navigation from the current user's position to the charging station will take and in case the navigation time exceeds the maximum reservation time will inform the user that the reservation is not feasible but ask the user instead whether the software should remind the user of the reservation possibility once the vehicle is close enough so that navigation time does not exceed the maximum reservation time.

In this manner, a charging system with excellent usability is provided that allows the user to place a reservation for a charging station in the vicinity of a desired destination without bothering about the availability and the precise location of the various charging stations.

The above and other objects and features of the present invention will become more apparent from the following description and preferred embodiments given in conjunction with the accompanying drawings, in which:
- Fig. 1A: is a lateral view of a charging pole,
- Fig. 1B: is a front view of the charging pole of Fig. 1A,
- Fig. 2: is a schematic block diagram of a charging station and system, and
- Fig. 3: is a flow chart for an automatic user authentication process performed at the charging station.

### DETAILED DESCRIPTION

### Charging Station

A charging station according to the present invention basically comprises a charging pole, which is a power source for providing electric power to the vehicle, a sensor for detecting whether the parking place is occupied or not, and a controller for performing an authentication process and for enabling charging of the vehicle with electric power provided by the power source in response to a result of the authentication process.

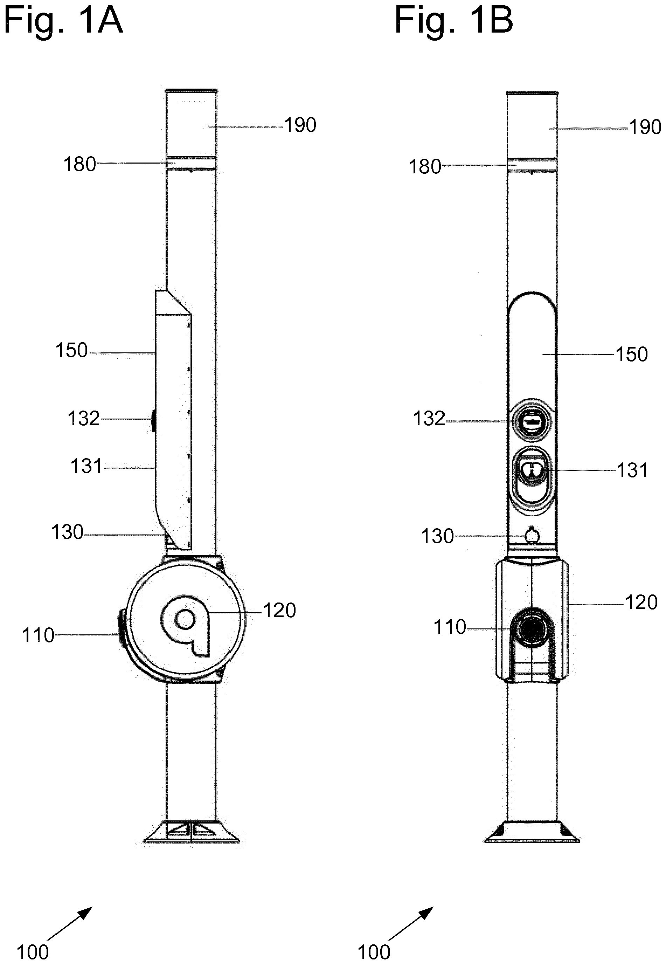

Fig. 1A and 1B show a lateral view and a front view, respectively, of a charging pole, which is part of a charging station for charging an electric vehicle according to an embodiment of the present invention.

The charging pole (100) is basically pole-shaped and has an integrated cable on a cable reel in a housing (120) with an outlet (110), a status light (180) and a top light (190), a cable holder with an LED ring around it (131), an additional charge plug also with a LED ring around it (132), a credit card/RFID reader (150), and a display, both hidden behind a vandalism-proof glass. The charging pole is connected to a distribution box (not shown) from where it receives electricity and Internet connectivity. A controller for controlling the various functions of the charging station may be integrated into the charging pole or the distribution box.

The charging pole may be comparatively high, for instance, about 2.2m. The reason for its height is to provide enough visibility from far. Most charging stations do not exceed 1.40m which makes them often hidden by parking cars or vans. Through its height, it is easy to see the pole from 100m or so even though a parking/stopping car or van may obstruct part of the view.

The status light (180) is a light ring round the entire pole at a height of about 2060mm. It consists of a line of LEDs which can change colour and light dispersing straps to achieve a homogeneous distribution of the light.

The status light indicates the current status of the charging pole and may been implemented in a very intuitive way: Constant "Green" may indicate that it is ready to be used, constant "Yellow" means the charging pole is reserved (to be explained below), and constant "red" means false parking, i.e. a vehicle which has parked at a charging pole without using the charging facility after a given amount of time (e.g. 2 min). A slightly pulsing "Yellow" may indicate that there is a vehicle which is currently connected to the charging pole with its cable. The different colours are achieved through 3 different RGB cables connecting the LEDs with the controller.

The pole has a white light on top of it, made of glass or transparent plastic. The brightness of the white light may dimmed depending on the time of the day. It may be off during day time and can be switched on at different levels depending on the darkness and preferences.

The pole may be equipped with an integrated cable, which may be provided on a cable reel on the pole itself (as shown in Figs. 1A and 1B), on a cable reel underground below the charging pole, or within the charging pole with a pulley mechanism.

When not in use, the charging cable may be rolled up within the charging pole (cable reel or pulley) and its end (male connector) may be fixed at the pole by a holder. Two mechanical brackets are implemented within the holder. These pull back under mechanical strain when shoving the connector into or out the holder ensure that it is held tightly and also gives the user a haptic (and acoustic) signal that the gun is properly in its place. The gun is also locked by a pin and only unlocks when the logic of the charging system decides to do so, in essence when a user has been authenticated. The cable reel/pulley is also locked by a pin mechanism, for instance by means of a pin which will be pushed into a hole in the cable reel by an electrical motor, so that it is not possible to pull out either side of the cable. This locking mechanism prevents vandalism or cable theft.

In a preferred embodiment, the mechanism of the cable lock is reversed when electricity is cut. In this case, the pins are locked automatically, whereas in conventional charging stations, they open. This is done because in traditional charging stations, the cable is brought by the user, so in order to make sure that the user can take his cable in case of cut of electricity, that makes sense. However, in the case where the cable is attached to the pole, when there is no electricity and hence no possibility to use the charging pole, there is no reason why somebody should be able to pull out the cable.

Once the user has authenticated himself (to be discussed below), the charging pole unlocks and the user can pull out the cable. The connector may be a type 2 connector which is the standard today in Europe for AC charging. The cable can either be a smaller 11kW cable or a larger 22 kW. The size of the cable reel is determined by the size and the length of the cable.

The cable can now be mechanically pulled out by the user to the necessary length and plug the cable connector into the car's plug socket. The cable reel (or pulley) contains a spring which ensures that the cable can be wind back to the pole easily. A ratchet locking mechanism may prevent the cable from winding back immediately and only upon pulling a bit on the cable will the ratchet mechanism free the cable (similar to a vacuum cleaner).

Alternatively, the user can decide to use its own cable. For this case, the charging pole may be provided with an additional type 2 (female) connector. This may be advantageous, because some cars do not have a type 2 socket. For example, some Japanese models may still have a type 1 socket, so the type 2 (male) connector will not fit. In this case, the user can use his own Type 1 to Type 2 cable.

### Charging System

A charging system according to the present invention basically comprises a plurality of the above described charging stations and a back-end server connected to each of the charging stations via a data communication network.

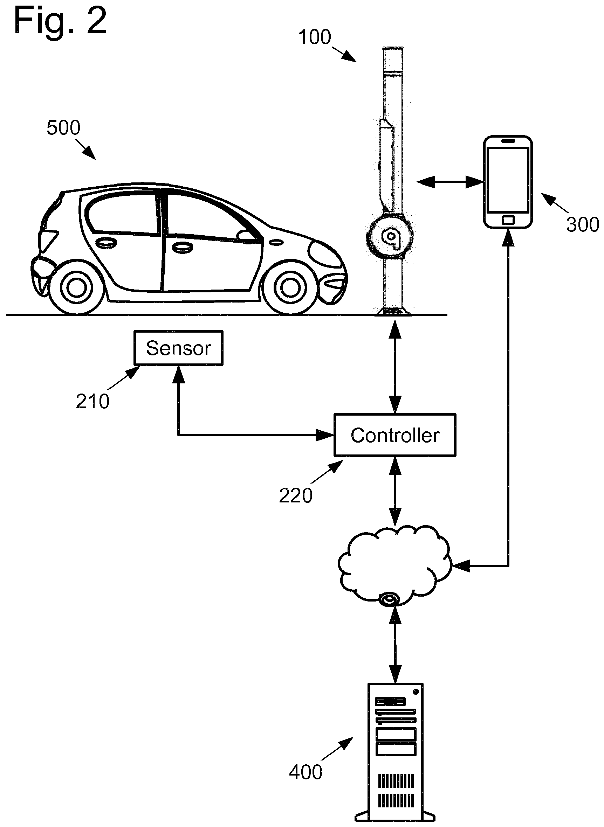

Fig. 2 is a schematic block diagram of a charging system according to an embodiment of the present invention. The system comprises at least one charging station (100), a vehicle sensor (210), a controller, and a back-end server 400.

The charging station (100) has already been discussed in conjunction with Fig. 1A and 1B and may further comprise a wireless communication unit (not shown) in order to establish wireless data communication with a mobile terminal, such as a smart phone (300), or a chip card, an RFID card, a Bluetooth dongle, or any other device that may be employed for user authentication.

The vehicle sensor (210) is adapted for detecting whether a parking place allocated to the charging station (100) is occupied by a vehicle (500) and to transmit a signal indicating the detection result to the controller 220. The connection between the sensor (210) and the controller (220) may be wired or wireless.

The detection of whether a vehicle is parked at the charging station is independent of whether the charging station is used or not, which is important to identify illegally parked vehicles at charging stations.

The vehicle sensor may be based on any suitable technology and may include, but is not limited to, a pressure sensor, a magnetic sensor, a radar sensor, an infrared sensor, or an imaging sensor.

A magnetic sensor may be arrange in the street floor. A sensor which measures the magnetic field around it will be drilled into the ground and covered with a layer of resin so it becomes invisible in the street. The sensor may also be fixed on the ground as well below the space where the car is parked. This sensor detects any changes in the terrestrial magnet field caused by nearby metallic objects of certain size. If a vehicle arrives, the magnetic field is distorted allowing the sensor to detect the presence the vehicle. For people or bicycles standing above it, the corresponding distortion is not large enough. The sensor may communicate wirelessly with a gateway which is built into the distributor box or the charging pole. The distribution box may communicate with the charging pole via Ethernet.

A radar sensor may be arrange within the charging pole, preferably in the top part of the pole so that it cannot be obstructed by metal objects leaning against the pole. Since radar is very good for identification of moving objects (Doppler effect), the pole needs to scan continuously for approaching and departing vehicles. The corresponding radar images then need to be analysed in real time in order to differentiate vehicles from e.g. bicycles or persons. Algorithms based on machine learning may be used for this purpose.

A comparatively cheap solution is based on infrared sensors although these sensors may have an issue with reliability. Also, the infrared signal will be sent back exactly at the same angle as it met an object which implies that the sensor needs to be at a low level (low enough to "meet the car" and then come back straight). This position also makes it susceptible to objects standing in its way and hence false information.

A vehicle may also be detected by an imaging sensor, e.g. with a video camera installed in the pole. The camera continuously scans the space in front of the pole and sends the image to a processor, which then in turn identifies when a car is parked in front of the pole. There are, however, a number of disadvantages for this technology, including data privacy and computational complexity. The analysis of those pictures is not trivial and requires significant computing power. This implies that either lots of data need to be send to the back end where computing power is ample (with the corresponding data transfer cost), or additional hardware and software needs to be built into the pole or the distribution box to analyse the data in situ, which is costly as well. On the other hand, the imaging system may also identify the car's number plate which could be used for user authentication, payment, parking tickets, etc.

The controller (220) is configured to control all major functions of the charging station, including guiding the user through an interactive dialogue, authenticating the user, performing accounting and payment operations, locking/unlocking of the gun and/or the cable reel, starting and monitoring the charging process, setting status lights of the charging pole, communicating with the mobile device (300) and with the back-end server (400), and so on. These operations are not necessarily performed by a single controller but may also be distributed over several independent hardware components.

The controller (220) is further provided with a network interface, such as an Ethernet adapter, a DSL modem, a WiFi card, a 3GPP modem, etc., in order to establish a data communication link to the back-end server, for instance via an Internet connection.

The charging system also comprises a wireless communication unit (not shown) located at or in the vicinity of the charging station for detecting and identifying nearby mobile devices (300). The wireless communication unit may also be used for establishing a data communication link with one or more mobile devices (300). Information may thus be exchanged between the mobile device (300) and the charging system either directly via the wireless data communication link or indirectly via a data service provider, the Internet and the back-end server 400, or a combination thereof. The exchanged information may pertain to user authentication, authorization, and/or accounting. The exchanged information may also pertain directly to the charging process and include commands for starting/stopping the charging process transmitted from the mobile device to the charging system or status information transmitted from the charging system to the mobile device. The exchanged information may also relate to general information on the charging system, including information on the location and the current status of charging stations in a certain area, information for navigating to a certain charging station, information for placing a reservation for a certain charging station, and information indicating that the user is entitled for using a previously reserved charging station.

On the mobile device, an application program may be installed which is configured to manage the exchange of data between the charging system and the mobile device, and to guide the user through various processes, including the authentication process, the reservation process, the navigation process, the charging process, and so on.

### Operation of the Charging System

The charging system according to the present invention operates as follows.

For the initiation of the charging procedure, the user must have been authenticated by the charging system. A first step consists in the detection of a vehicle in front of a charging pole. This is done by means of the vehicle sensor. Once the vehicle is detected, the status light of the charging pole switches to yellow (constant or blinking) so that it becomes evident that the pole is not free any more. Also, the display which until now was switched off, now shows a pictogram that authentication is necessary. There are different options for performing authentication, which will be discussed below.

Once the user has been authenticated, both LED rings will start to flash to indicate that the user should use either the cable or plug in his own cable. Also, the display will show an arrow to indicate readiness to use the cable or the plug. Flashing of LED rings and the displaying of the arrow will stop once the connection between the car and the charging pole has been established, i.e. when the user has plugged in the cable. The display will then show an animated symbol of a charging battery and the status light will change to constant yellow.

Provided that the user has installed a suitable application program on their smartphone and used same for authentication, then an indication that the car is being charged will also be displayed on the smartphone. Moreover, the smartphone may also display the actual state of charge, the length of time to achieve a state of charge of X% (to be configured by the user), and/or a warning y minutes ahead of the accomplishment of the state of charge of X%, possibly depending on the location of the vehicle and the user and the time the user needs to go to the vehicle. Availability of this information may depend on a communicating between the vehicle and the charging station, as laid down, for instance, in ISO 15118.

Once the user comes back to the car, he/she first needs to unlock the vehicle and the charging cable from the vehicle. Once this is done, in the case of the integrated cable, the display will show an animated picture which asks the user to plug the cable back into the cable holder. The light ring round the cable holder will also blink. In case of the user cable, only the light ring around the integrated plug socket will blink. Once the cable has been plugged back into the pole (or the user cable has been pulled out of the charging pole socket), the LED light ring will stop to blink, a "tick" will appear on the display to indicate that the charging operation has been successfully terminated. Subsequently, amount of charged kWh as well as the price will be shown on the display for several seconds, followed by a "Thank you. Good Bye".

Upon arrival of a vehicle, the vehicle sensor 210 detects the vehicle within a short time (typically within about 10 sec). When the vehicle has parked there for certain amount of time without a charging process being initiated and without having been authenticated as a registered user, the system may conclude that the vehicle in question is a parking offender. It will display a "no parking sign" in the display and the status light will turn red. In case of willingness of the city authorities, the system may also send messages (e.g. SMS to the traffic police) so that appropriate steps can be taken.

For registered users who had been identified previously (wirelessly or via card) which have not initiated a charging operation are assumed to have problems and a symbol at the display appears after a certain amount of time reminding them that charging points are not for parking and are asked to call a helpline if they have a problem.

### User Authentication

User authentication may be performed in a conventional manner, for instance, by means of an RFID membership card. The user holds his membership card onto the designated reader, which reads the RFID card, and compares this with the back-end database. As soon as authentication and authorization is successfully completed, the charging pole is ready to charge.

According to the present invention, however, authentication is performed automatically without the need of any user interaction. To this end, the charging station automatically identifies the user wirelessly and prepares the pole to be ready to charge (unlock cable, display and charge point into ready for action mode).

Automatic wireless user authentication may be based on one of several different wireless technologies, such as Bluetooth.

Every Bluetooth devices has a name (which can be changed) and a unique MAC address (like most network technologies in the IEEE 802 family) which serves as a unique identifier of this device. A Bluetooth device can be hence used to uniquely identify a registered user provided that the MAC address has been registered together with other user data, for instance, in a database.

The Bluetooth identification may be achieved, for instance, via a Bluetooth dongle or a Bluetooth token, which is provided to the user upon registration with the operator of the charging stations. The user puts the Bluetooth dongle in his car, sticks it to the windscreen, or carries the dongle when approaching the charging station. The wireless communication unit (i.e., a Bluetooth receptor) in the charging station may continuously scan for a Bluetooth device, obtain its MAC addresses, send the MAC addresses to the back-end server when at the same time a car has just parked at the pole. The back-end server then searches in the member database to find out whether it "knows" this MAC address and to which user it belongs. If successful, back-end server communicates back to the charging station which in turn switches the pole to "ready for charging", i.e. unlocks the cable and/or the power outlet, and prepares for charging.

The use of a Bluetooth token has the advantage that each device has a predefined MAC address that can be entered into the database prior to sending the token to the user, so that no additional registration has to be performed by the user. On the other hand, the Bluetooth token is an active token and requires a battery that has to be changed once a year or so.

Bluetooth identification may also be achieved by means of the user's smart phone Bluetooth system, provided that the user has agreed that the application program can activate the Bluetooth system of the user's smart phone for identification. Bluetooth identification may also be achieved by means of the user's car Bluetooth system, provided that the OEM has opened the Bluetooth system to allow the charging system to use it.

The present invention is not limited to Bluetooth as a means for authentication. Instead, other wireless technologies may used as well, such as (long-range, UHF) RFID or WiFi. The charging station may even be equipped with more than one wireless communication unit in order to support different wireless technologies.

Long range (UHF) RFID has the advantage that passive RFID tags may be used, which implies that no battery is necessary. Here, the user receives a passive RFID tag which he puts into his car (similar to the BT token) at an appropriate place. Long range RFID are frequently used in toll-collection, although (still) mainly with active tags. On the negative side, RFID systems may be more prone to hacking.

Generally, near field communication (NFC) may also be used for wireless authentication. However, NFC only works at small distances of typically 1m or less. This makes it a suitable technology for tapping cards or token or smartphones onto a reader, but not to commence a wireless identification when the user's device (token, smartphone, car) is several meters away from the reader.

In an urban environment, a plurality of different wireless devices may temporarily be present within the range of the wireless communication unit installed at the charging station. According to the present invention, however, only those wireless devices will be considered for authentication that enter the range of the wireless communication unit at roughly the same time when the vehicle sensor has detected a vehicle, i.e., when the signal provided by the vehicle sensor has changed from "non-occupied" to "occupied". In a preferred embodiment, a time window is defined in which wireless devices within the range of the charging station are considered for authentication. The time window may be defined relative to the time point when the signal provided by the vehicle sensor has changed from "non-occupied" to "occupied", i.e., when the vehicle is detected, and may last for a short interval of time, such as ten seconds, one minute, or a few minutes. The time window may start before or after the vehicle is detected. More specifically, the time window may start a certain number of seconds before the vehicle is detected and close a certain number of seconds after the vehicle has been detected. The temporal offset and the duration of the time interval may be adapted to circumstances, e.g. depending on the expected number of "other" mobile devices or the time a drive may need to park the car, to get out of the car, to walk over to the charging pole, etc. Any Bluetooth signals or devices that might be detectable before or after the time window, i.e., before the vehicle has arrived or after the specified time interval after the vehicle has been parked, will not be processed since they are considered to belong not to the user whose vehicle has just arrived. Further, a mobile device may be considered to be "detected" if its signal is received repeatedly (e.g. twice) within a short interval of time (e.g. 10 seconds) with a certain minimum signal amplitude.

During the thus specified time window, the charging station searches for wireless devices that may be used for authentication. If Bluetooth technology is used for authentication, the Bluetooth receiver in the charging station will scan continuously for other Bluetooth devices and identify the MAC address of any devices found. All of the identified MAC addresses that have been found within the time window for the first time will be sent to the back-end server in order to look up a potential user.

Thus, the wireless communication unit may permanently monitor the presence of wireless devices in its neighbourhood in order to identify a device that arrives coincidentally with the vehicle detected by the vehicle sensor. Here, a device may be considered to arrive coincidentally with the vehicle if it is detected for the first time within a time window specified relative to the point in time when the sensor signal changes from non-occupied to occupied. Depending on the range of wireless communication and the responsiveness of the vehicle detector, the wireless device may even be detected before the vehicle so that time windows have to be set accordingly. Alternatively, the search for wireless devices may also be limited to the specified time window, i.e., the wireless communication unit at the charging station may only be active during the time window.

If only a single wireless device is detected during the specified time window, then this device will be selected for authentication. On the other hand, if more than one wireless device is detected during the specified time window, additional processing is required in order to decide which one of these devices is to be used for authentication.

The additional processing may comprise, for instance, a database lookup in order to determine which of these devices has been registered previously with the operator of the charging station. The database lookup may be based, for instance, on the MAC address of the respective device. If it is determined that only one device is already "known" to the system, then this device will be selected for authentication.

If more than one device with a previously registered MAC address is detected within the specified time window, for instance if one registered user is parking her car while another registered user happens to pass by, the system may not be sure who is who. In order to resolve such a situation, the strength of the wireless signal or the temporal envelope of the signal strength may be taken into account. For instance, if the system receives a strong signal from a first device together with weak signal (or a gradually fading signal) from a second device, the charging system may choose the first device for authentication. On the other hand, if the situation is not clear cut, for instance because the signal strength difference is not large enough, then the system cannot decide and a two factor authentication may be required. The charging pole may thus display a symbol for two factor authentication. Moreover, the application program may prompt the user to indicate whether he/she wants to use the charging pole. The pole will change to the ready-for-charging mode only after a user confirmation is received.

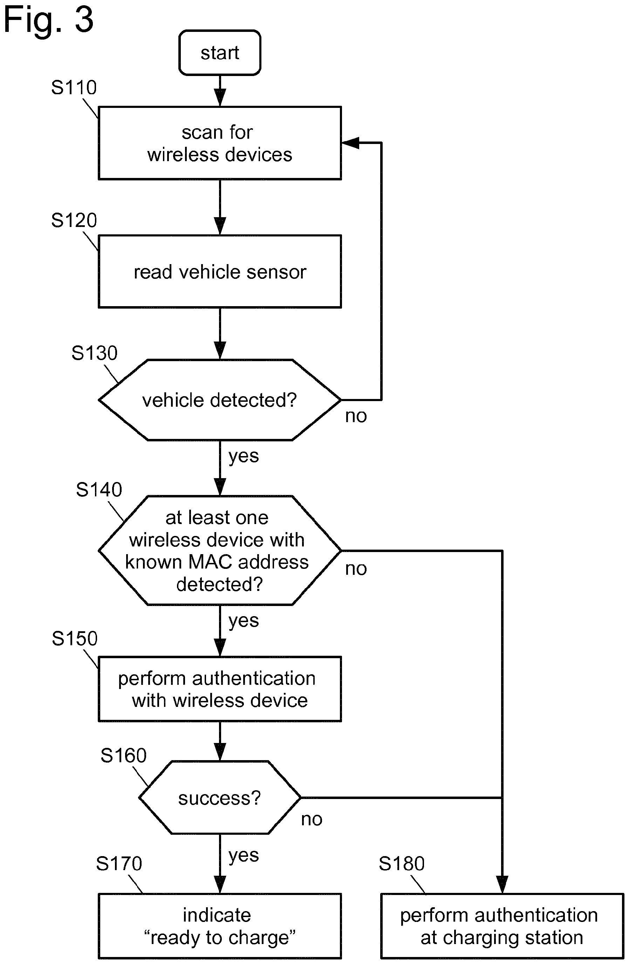

Figure 3 shows a flow chart for an automatic user authentication process performed at the charging station.

The charging station scans for wireless devices in step S110 and reads the vehicle sensor in step S120. If a vehicle is detected ("yes" in step S130), it is determined whether at least one wireless device with a known MAC address has been detected. Here, it may additionally be determined whether this device has been detected for the first time, i.e., whether it arrived coincidentally with the vehicle. Only for those devices, the MAC addresses may be transmitted to the back-end server in order to match same against previously registered MAC addresses. The authentication process in step S150 may comprise the exchange of user credentials, cryptographic certificates, a challenge and a response, or other information items with the back-end server. If authentication is successfully completed ("yes" in step S160), then the charging station will change to the ready-for-charging mode and provide a suitable indication to the user (S170). If authentication with the wireless device in step S150 failed or if no known wireless device could be detected during the specified time window, then manual authentication has to be performed at the charging station (S180). Manual authentication may comprise interaction with a user interface provided at the charging pole in order to enter user credentials, payment information, etc.

Manual authentication may also be necessary for "ad-hoc users", i.e., user that are not registered with the operator of the charging system. Manual authentication may comprise roaming authentication and payment. In this case, the charging station is also capable to use roaming services and recognize RFID cards or RFID tokens of other electro-mobility providers ("EMPs") or charge point operators ("CPOs") via a connection to a roaming platform.

Manual authentication may also comprise a payment via credit card or debit card, or Apple Pay or Google Pay. To this end, the card reader is not only able to ready RFID cards but also credit card/debit cards. In a preferred embodiment, the charging pole has built in a card reader which is EMV certified L1/2 and together with payment gateway and acquirer bank L3 certified. This is the standard certification in Europe today for contactless payment. Hence the user may simply holds his/her credit card, debit card, or smart phone a short moment in front of the card reader so that a pre-authorization of the respective card can be initiated. Upon successful completion, the pole is ready for charging. Final deduction of the charging amount and the user cost is displayed on the display upon completion of the charging procedure.

For registered users, e.g. users that employ an application program which has payment details stored therein, payment may be carried out automatically. Payment details may relate to credit card or debit card details, to pay pal details, to a direct debiting scheme, etc., as well as to the corresponding authorization.

Once a transaction (charging process) is completed, users can see the price they have to pay on the display. Additionally, the application program may also provide information on the recent and/or previous invoices generated by the system.

Then charging system may also be adapted to provide dynamic load charging and pricing. More specifically, the charging system may be capable of charging at different intensities depending on circumstances to be defined in the back-end. For example, a night tariff may be offered to benefit from cheaper energy prices during night time. A timer functionality may be provided (either via the application program or the charging station) to start the charging process only a specified time, e.g. only after 11.00 p.m. when electricity becomes cheaper. The pricing may be adapted dynamically and displayed on the application program or the display of the charging station. For example at days with a lot of wind, prices for charging can be lowered and promotions can be offered on the application program or the display of the charging station.

### Reservation System

In a preferred embodiment, the charging system is configured to co-operate with an application program running on a user's mobile terminal in order to provide reservation and navigation services for currently available charging stations. Specifically, the charging system may provide functions for finding charge stations, navigating to them, showing their availability, as well as placing a reservation of available charge points.

To this end, the mobile device may display a map of an area around the user's current location, the current position of the user (green or blue dot), the charging stations as yellow dots, where the number in the circle means the number of available charging poles at each charging station.

Also, in the upper part of the screen, a search bar may be displayed for entering a desired destination. In the lower part, a black button with a yellow microphone may be shown. Upon pressing this button, the user can change into the speech menu and a voice will ask where the user would like to go.

Answering (or inputting in writing in the search bar) where one would like to go (a street, or landmark) in the city where one currently is, the app will then automatically search for the nearest available charge point around this destination. If the street mentioned is too long, the app will ask to specify the destination closer ("Please provide a street number or corner"). The application program will then come back with the search result which is an available charging station ("The nearest available charging station is 150m / 2 min walking from your destination.").

The application program may also enquire whether the user wants to reserve it ("The nearest (..) charging point is 2 min walking from your destination. Would you like to reserve it"?). Upon answering positively, the system will carry out the reservation and the application program will confirm and hold the reservation during the specified reservation time, which may vary from city to city ("your charging pole is now reserved for you for the next xxx min"). If the charge point is too far away (i.e. the real-time travel time which the application program calculates in the background exceed the maximum reservation time, the application program will come back and inform the user that a reservation is not possible. However, the application program may ask the user whether he wants to be reminded once he is close enough to the charging station. If the answer is yes, the application program will monitor in the background and once the travel time is sufficiently small to reach the charge point within the maximum reservation time ask the user again.

After the reservation (or if the proposal to reserve is rejected by the user), the application program will ask whether the user would like to have navigation information. If answered positively, the application program will then open the user's preferred navigation application (Google Maps, Ways, Here, etc.) and the navigation app will start with the navigation to the destination without further instructions.

Should, however, the estimated travel time between the current location and the next available charging station exceed the specified reservation time (which the application program calculates automatically in the background) then the system will come back and inform the user that the estimated travel time takes too long to reserve. It will ask the user whether he/she is interested in being reminded by the system when a reservation can be placed, i.e., when the estimated travel time to the charging station is equal to or smaller than the specified reservation time.

Should the traffic conditions change in a way that the charge point is not reachable within the specified reservation time by yy minutes, then the system will automatically inform the user that the reservation cannot be met. If, however, the time is only exceeded by zz minutes (zz = yy + D > specified reservation time) then, the reservation will not be cancelled.

Upon expiring of the reservation time, the system will ask the user whether he wants to prolong the reservation time by oo minutes (a small amount), whereby the time of prolongation needs to be larger than the estimated remaining travel time.

In close proximity (to be configured) of the reserved charging pole, the application program will notify the user that the charging station is in close proximity and that he should look out for a charging pole with a yellow status light. The pole will also show a reserved sign in the display.

The charging station and system according to the present invention can thus achieve the following advantages.

The user may input a desired destination, not the charging station. The available charging station closest to the desired destination will be determined by the back-end server and/or the application program.

Moreover, the system is not only aware of whether a charging station is being used or not, but also of whether a car is parked there without charging. Therefore, there is no risk of guiding the user to a charging station that is not currently in use but blocked by an illegally parked vehicle.

The system provides a natural language interface with speech recognition and voice output. The system may thus be operated wile driving.

The reservation system allows the user to reserve a charging station, e.g. via an application program. The reserved charging station will show up in the user's application program as reserved and in the other users' application program as not available. Moreover, the status of a reserved charging station is also indicated by status lights on the charging pole and by an icon on its display.

A previously placed reservation may be automatically prolonged if real traffic takes longer than estimated.

A warning may be issued by the application program if a reservation is not possible in case that the estimated travel time exceeds the maximum reservation time.

## Claims

1. A charging station for charging an electric vehicle (500) on a parking place allocated to the charging station, said charging station comprising
a power source (100) for providing electric power to the vehicle (500);
a sensor (210) for detecting whether the parking place is occupied or not; and
a controller (220) for performing an authentication process and for enabling charging of the vehicle (500) with electric power provided by the power source (100) in response to a result of the authentication process,
**characterized in that**
the controller (220) is configured to initiate the authentication process when a detection result of the sensor (210) has changed from not occupied to occupied.

2. The charging station of claim 1, further comprising a card reader (150) configured to read authentication information stored on a card, in particular on a credit card, a girocard, an RFID membership card, an RFID roaming card or an RFID tag,
wherein the controller (220) is further configured to enable the card reader (150) to read the authentication information only after the detection result of the sensor (210) has changed from not occupied to occupied.

3. The charging station of claim 1, further comprising
a wireless communication unit configured to scan for mobile devices (300) in a vicinity of the charging station,
wherein the controller (220) is further configured to determine whether at least one of the scanned mobile devices (300) has been previously registered with an operator of the charging station, and to complete the authentication process with one of the previously registered mobile devices (300).

4. The charging station of claim 3, wherein the mobile device (300) is a mobile phone, a smart phone, an RFID tag, a long-range RFID tag, a Bluetooth device, an in-vehicle Bluetooth device, a Bluetooth token, a WiFi device, or an in-vehicle WiFi device.

5. The charging station of claim 3 or 4, wherein the controller (220) is further configured to determine whether a mobile device has been scanned for the first time when the detection result of the sensor (210) has changed from not occupied to occupied, and to determine whether the mobile device has been previously registered only if the mobile device (300) has been scanned for the first time not more than a first amount of time before and not later than a second amount of time after the detection result of the sensor (210) has changed from not occupied to occupied.

6. The charging station of any of claims 3 to 5, wherein, if is determined that more than one of the scanned devices has been previously registered with the operator of the charging station, the controller (220) is further configured to determine a strength of a wireless signal received from the previously registered mobile devices (300), and to complete the authentication process with the previously registered mobile device (300) from which the strongest wireless signal is received.

7. The charging station of any of claims 3 to 6, wherein, if is determined that more than one of the scanned devices has been previously registered with the operator of the charging station, the controller (220) is further configured to switch to a 2-factor authentication which requires an additional confirmation at the respective device.

8. The charging station of any of claims 3 to 7, wherein the controller (220) is further configured to obtain a MAC address of each of the scanned mobile devices (300) and to determine whether the scanned device has been previously registered with the operator of the charging station on the basis of the obtained MAC address.

9. The charging station according to any of the preceding claims, further comprising
a socket (132) for receiving a cable to connect the vehicle (500) to the power source (100) and/or
a cable (120) with a plug connector for connecting the cable to the vehicle (500),
wherein enabling the charging process comprises at least one of activating the power source (100), unlocking the socket, and unlocking the cable.

10. The charging station according to any of the preceding claims, further comprising
a socket (132) for receiving a cable to connect the vehicle (500) to the power source (100) and/or
a cable (120) with a plug connector for connecting the cable to the vehicle (500),
wherein initiating the authentication process comprises unlocking the socket and/or unlocking the cable.

11. The charging station according to any of the preceding claims, wherein the sensor (210) is pressure sensor, a magnetic sensor, a radar sensor, an infrared sensor, or an imaging sensor.

12. The charging station according to any of the preceding claims, further comprising a status indicator (180) for providing a visual indication of at least two different states of the charging station selected from available, reserved, occupied, charging, out of service, and illegal parking.

13. The charging station according to any of the preceding claims, further comprising
a network interface,
wherein the controller (220) is further configured to communication with a remote server (400) via the network interface to exchange at least one of authentication information, authorization information and accounting information.

14. The charging station according to claim 13, wherein the controller (220) is further configured to transmit status information to the remote server (400) and/or to receive reservation information from the remote server (400), said status information indicating a present state of the charging station, including available, reserved, occupied, charging, out of service, and illegal parking.

15. A charging system for electric vehicles, said system comprising
a plurality of charging stations (100, 210, 220) according to any of the preceding claims, and
a server (400) connected to each of the charging stations (100, 210, 220) via a data communication network, said server (400) being configured
to receive status information from each of the plurality of charging stations (100, 210, 220), said status information indicating a present state of the respective charging station, including at least one of available, reserved, occupied, charging, out of service, and illegal parking,
to maintain a database with information on the plurality of charging stations (100, 210, 220), including information on the location of each of the charging stations (100, 210, 220) and the received status information, and
to provide information on the state and the location of a charging station in a form retrievable by mobile communication terminals.

16. The charging system according to claim 15, wherein the server (400) is further configured to receive a reservation request from a mobile communication terminal (300), said reservation request indicating a desired charging station of the plurality of charging stations (100, 210, 220), to determine whether the reservation request can be allowed, to transmit a reservation response to the mobile communication terminal, and to transmit, if the request has been allowed, a reservation instruction to the desired charging station.

17. The charging system according to claim 16, wherein the mobile communication terminal is configured to initiate the reservation request via a touch or a speech menu.

18. The charging system according to claim 16 or 17, wherein the reservation request indicates a desired destination input by the user at the mobile communication terminal and the reservation response indicates the next available charging station and a distance from the charging station to the desired destination.

19. The charging system according to any of claims 16 to 18, wherein the mobile communication terminal is configured to ask the user whether he/she wants to reserve said charging station and to ask the user whether he/she wants to navigate there.

20. The charging system according to any of claims 16 to 19, wherein the mobile communication terminal is configured to check in real-time how long navigation from the current user's position to the charging station will take and in case the navigation time exceeds the maximum reservation time will inform the user that the reservation is not feasible but ask the user instead whether the software should remind the user of the reservation possibility once the vehicle (500) is close enough so that navigation time does not exceed the maximum reservation time.
